# EUROPEAN PATENT APPLICATION

(11) **EP 4 598 080 A1**
(43) Date of publication of application: **06.08.2025**
(21) Application number: 22960090.3
(22) Date of filing: 29.09.2022
(51) Int. Cl.: H04W 12/084, H04L 9/40, H04W 12/06, H04L 27/00

(54) **RESOURCE CALLING METHOD AND APPARATUS**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Stöckeler, Ferdinand
(86) International application number: PCT/CN2022/122802
(87) International publication number: WO 2024/065453

(57) **Abstract**

The present disclosure relates to the technical field of mobile communications, and provides a resource calling method and apparatus. According to the method, a resource owner can receive a resource authorization request and/or an application programming interface (API) authorization request sent by an API caller, wherein the resource authorization request is used for requesting, setting or modifying a resource of the resource owner; and send an authorization code request to a first entity, wherein the authorization code request is used for requesting an authorization code, and the resource owner can send the authorization code received from the first entity to the API caller. According to the solution of the present disclosure, a UE can authorize the API caller in an API calling scenario to request a resource of the UE, thereby avoiding data tampering by the resource owner during the authorization process.

## Description

### TECHNICAL FIELD

The disclosure relates to the field of mobile communication technologies, and particularly to a method and an apparatus for invoking a resource.

### BACKGROUND

One of objectives of security research on subscriber-aware northbound application programming interface (API) access (SNA) sensed by a user is about obtaining authorization from a resource owner. In the related art, it is stipulated that a user equipment (UE) is allowed to provide/revoke consent for information to be shared with a third party. In this case, the UE is the resource owner, and an API invoker needs to obtain authorization of the UE before requesting the resource (such as, location information of a specific UE). However, there is no mechanism to enable the UE to authorize the API invoker to request the resource of the UE in an API invocation scenario.

### SUMMARY

Embodiments of the disclosure provide a method and an apparatus for invoking a resource, such that a user equipment (UE) may authorize an application programming interface (API) invoker to request a resource of the UE in an API invocation scenario.

A first aspect of embodiments of the disclosure provides a method for invoking a resource. The method is performed by a resource owner, including: receiving an authorization request for the resource and/or an API authorization request from an API invoker, in which the authorization request for the resource is used to request, set, or modify the resource of the resource owner; sending an authorization code request to a first entity, the authorization code request being used to request an authorization code; and sending the authorization code received from the first entity to the API invoker.

In some embodiments, the method further includes performing mutual authentication with the API invoker; and in the case that the mutual authentication is passed, establishing a first connection between the resource owner and the API invoker, in which the first connection is a secure connection for transmitting the authorization request for the resource and/or the API authorization request.

In some embodiments, performing the mutual authentication with the API invoker includes at least one of: in the case that the API invoker is a UE, performing the mutual authentication with the API invoker based on a certificate; or in the case that the API invoker is an application function (AF), performing the mutual authentication using a generic bootstrapping architecture (GBA)-based authentication mechanism, an authentication and key management for applications (AKMA)-based authentication mechanism, or a certificate-based authentication mechanism.

In some embodiments, receiving the authorization request for the resource and/or the API authorization request from the API invoker includes: in the case that the API invoker obtains authorization of a service, receiving the authorization request for the resource from the API invoker; and in the case that the API invoker does not obtain the authorization of the service, receiving the authorization request for the resource and the API authorization request from the API invoker, in which the authorization request for the resource includes at least one of: an API invoker identity (ID), a resource owner ID, or a target resource ID, and the API authorization request includes a service identifier.

In some embodiments, the service identifier includes at least one of: a service name identifier; a service operation identifier; an operation semantic identifier; or an API ID.

In some embodiments, the method further includes performing mutual authentication with the first entity; and in the case that the mutual authentication is passed, establishing a second connection between the resource owner and the first entity, in which the second connection is a secure connection for transmitting the authorization code request and a response.

In some embodiments, performing the mutual authentication with the first entity includes: performing the mutual authentication based on at least one of the following authentication mechanisms: the certificate-based authentication mechanism; the GBA-based authentication mechanism; the AKMA-based authentication mechanism; a transport layer security with pre-shared key (TLS-PSK); or an open authorization (OAuth) token-based authentication mechanism.

In some embodiments, sending the authorization code request to the first entity includes at least one of: granting the authorization request for the resource timely and sending the authorization code request to the first entity; granting the authorization request for the resource asynchronously based on a local profile of the resource owner, and sending the authorization code request to the first entity; or sending a local profile and/or the authorization code request to the first entity, in which the local profile is used to assist the first entity to asynchronously grant the authorization request for the resource.

In some embodiments, the method further includes, in the case that the authorization request for the resource is authorized and the API invoker obtains the authorization of the service, receiving the authorization code from the first entity.

In some embodiments, the resource owner is a UE and the resource is quality of service and/or location information of the UE.

A second aspect of embodiments of the disclosure provides a method for invoking a resource, performed by a first entity. The method includes: receiving an authorization code request from a resource owner, the authorization code request being used to request an authorization code; sending the authorization code to the resource owner; receiving the authorization code from an API invoker; and generating a token based on the authorization code and sending the token to the API invoker.

In some embodiments, the method further includes performing mutual authentication with the resource owner; and in the case that the mutual authentication is passed, establishing a second connection between the resource owner and the first entity, in which the second connection is a secure connection for transmitting the authorization code request and a response.

In some embodiments, performing the mutual authentication with the resource owner includes at least one of: performing the mutual authentication based on at least one of the following authentication mechanisms: a certificate-based authentication mechanism; a GBA-based authentication mechanism; an AKMA-based authentication mechanism; a TLS-PSK; or an OAuth token-based authentication mechanism.

In some embodiments, receiving the authorization code request from the resource owner includes at least one of: receiving the authorization code request based on a timely grant of an authorization request for the resource by the resource owner; receiving the authorization code request based on an asynchronously grant of the authorization request for the resource by the resource owner; or receiving a local profile and/or the authorization code request from the resource owner, and granting the authorization request for the resource asynchronously.

In some embodiments, receiving the authorization code request from the resource owner further includes: in the case that the authorization request for the resource is granted and the API invoker obtains the authorization of the service, generating the authorization code.

In some embodiments, in the case that the authorization request for the resource is granted and the API invoker obtains the authorization of the service, generating the authorization code includes: in the case that the authorization request for the resource is granted but the API invoker does not obtain the authorization of the service, determining whether an authorization request for the service of the API invoker is granted based on a preset profile; and in the case that the authorization request for the service of the API invoker is granted, generating the authorization code.

In some embodiments, the method further includes performing mutual authentication with the API invoker; and in the case that the mutual authentication is passed, establishing a third connection between the API invoker and the first entity, in which the third connection is a secure connection for transmitting the authorization code.

In some embodiments, performing the mutual authentication with the API invoker includes: performing the mutual authentication based on at least one of the following authentication mechanisms: the certificate-based authentication mechanism; the GBA-based authentication mechanism; the AKMA-based authentication mechanism; the TLS-PSK; or the OAuth token-based authentication mechanism.

In some embodiments, generating the token based on the authorization code and sending the token to the API invoker includes at least one of: sending an access token and/or a refresh token to the API invoker; and receiving the refresh token from the API invoker, sending the access token to the API invoker based on the refresh token.

In some embodiments, the first entity is a common application programming interface framework (CAPIF) core function/authorization function.

A third aspect of embodiments of the disclosure provides a method for invoking a resource, performed by an API invoker. The method includes: sending an authorization request for the resource and/or an API authorization request to a resource owner, in which the authorization request for the resource is used to request, set, or modify the resource of the resource owner; receiving an authorization code from the resource owner and sending the authorization code to a first entity; and receiving a token generated by the first entity based on the authorization code.

In some embodiments, the method further includes performing mutual authentication with the resource owner; and in the case that the mutual authentication is passed, establishing a first connection between the resource owner and the API invoker, in which the first connection is a secure connection for transmitting the authorization request for the resource and/or the API authorization request.

In some embodiments, performing the mutual authentication with the resource owner includes at least one of: in the case that the API invoker is a UE, performing the mutual authentication with the resource owner based on a certificate; or in the case that the API invoker is an AF, performing the mutual authentication with the resource owner using a GBA-based authentication mechanism, an AKMA-based authentication mechanism, or a certificate-based authentication mechanism.

In some embodiments, sending the authorization request for the resource and/or the API authorization request to the resource owner includes: in the case that the API invoker obtains authorization of a service, sending the authorization request for the resource to the resource owner; and in the case that the API invoker does not obtain the authorization of the service, sending the authorization request for the resource and the API authorization request to the resource owner, in which the authorization request for the resource includes at least one of: an API invoker identity (ID), a resource owner ID, or a target resource ID, and the API authorization request includes a service identifier.

In some embodiments, in the case that the API invoker obtains the authorization of the service, and the authorization request for the resource sent from the API invoker to the resource owner is granted, the token generated by the first entity based on the authorization code includes only authorization information related to the resource.

In some embodiments, the method further includes performing mutual authentication with the first entity; and in the case that the mutual authentication is passed, establishing a third connection between the API invoker and the first entity, in which the third connection is a secure connection for transmitting the authorization code.

In some embodiments, receiving the token generated by the first entity based on the authorization code includes at least one of: receiving an access token and/or a refresh token from the first entity; or sending the refresh token to the first entity and receiving the access token from the first entity based on the refresh token.

In some embodiments, the API invoker is a UE or an AF, and the resource is quality of service and/or location information of the resource owner.

A fourth aspect of embodiments of the disclosure provides an apparatus for invoking a resource. The apparatus is configured in a resource owner, including a transceiver module. The transceiver module is configured to: receive an authorization request for the resource and/or an API authorization request from an API invoker, in which the authorization request for the resource is used to request, set, or modify the resource of the resource owner; send an authorization code request to a first entity, the authorization code request being used to request an authorization code; and send the authorization code received from the first entity to the API invoker.

A fifth aspect of embodiments of the disclosure provides an apparatus for invoking a resource. The apparatus is configured in a first entity, including a transceiver module. The transceiver module is configured to: receive an authorization code request from a resource owner, the authorization code request being used to request an authorization code; send the authorization code to the resource owner; receive the authorization code from an API invoker; and generate a token based on the authorization code and send the token to the API invoker.

A sixth aspect of embodiments of the disclosure provides an apparatus for invoking a resource. The apparatus includes a transceiver module. The transceiver module is configured to: send an authorization request for the resource and/or an API authorization request to a resource owner, in which the authorization request for the resource is used to request, set, or modify the resource of the resource owner; receive an authorization code from the resource owner and send the authorization code to a first entity; and receive a token generated by the first entity based on the authorization code.

A seventh aspect of embodiments of the disclosure provides a communication system. The system includes a resource owner, an API invoker, and a first entity.

The resource owner is configured to perform any method for invoking the resource of the first aspect of embodiments.

The first entity is configured to perform any method for invoking the resource of the second aspect of embodiments.

The API invoker is configured to perform any method for invoking the resource of the third aspect of embodiments.

An eighth aspect of embodiments of the disclosure provides a communication device. The communication device includes a transceiver; a memory; and a processor. The processor is connected to the transceiver and the memory respectively, and configured to control receiving and sending of a wireless signal of the transceiver by executing computer-executable instructions in the memory and is capable of realizing the method for invoking the resource in the first aspect of embodiments, the second aspect of embodiments, or the third aspect of embodiments.

A ninth aspect of embodiments of the disclosure provides a computer storage medium. The computer storage medium stores computer-executable instructions When the computer-executable instructions are executed by a processor, the method for invoking the resource in the first aspect of embodiments, the second aspect of embodiments, or the third aspect of embodiments is realized.

Embodiments of the disclosure provide the method and the apparatus for invoking the resource. The resource owner may receive the authorization request for the resource and/or the API authorization request from the API invoker, in which the authorization request for the resource is used to request, set, or modify the resource of the resource owner, and send the authorization code request to the first entity, the authorization code request being used to request the authorization code. The resource owner may send the authorization code received from the first entity to the API invoker. With the solution provided in the disclosure, it is realized that the UE may authorize the API invoker to request the resource of the UE in the API invocation scenario, thus avoiding that data is tampered by the resource owner during the authorization process.

Additional aspects and advantages of the disclosure will be set forth in part in the following description, and some may be obvious from the description or be learned by practice of the disclosure.

### BRIEF DESCRIPTION OF THE DRAWINGS

The above-mentioned and/or additional aspects and advantages of the disclosure will become apparent and readily appreciated from the following description of embodiments in combination with the accompanying drawings.
FIG. 1 is a flow chart illustrating a method for invoking a resource according to an embodiment of the disclosure.
FIG. 2 is a flow chart illustrating a method for invoking a resource according to an embodiment of the disclosure.
FIG. 3 is a flow chart illustrating a method for invoking a resource according to an embodiment of the disclosure.
FIG. 4 is a flow chart illustrating a method for invoking a resource according to an embodiment of the disclosure.
FIG. 5 is a flow chart illustrating a method for invoking a resource according to an embodiment of the disclosure.
FIG. 6 is a flow chart illustrating a method for invoking a resource according to an embodiment of the disclosure.
FIG. 7 is an interaction schematic diagram illustrating a method for invoking a resource according to an embodiment of the disclosure.
FIG. 8 is an interaction schematic diagram illustrating a method for invoking a resource according to an embodiment of the disclosure.
FIG. 9 is a block diagram illustrating an apparatus for invoking a resource according to an embodiment of the disclosure.
FIG. 10 is a block diagram illustrating an apparatus for invoking a resource according to an embodiment of the disclosure.
FIG. 11 is a block diagram illustrating an apparatus for invoking a resource according to an embodiment of the disclosure.
FIG. 12 is a block diagram illustrating an apparatus for invoking a resource according to an embodiment of the disclosure.
FIG. 13 is a block diagram illustrating an apparatus for invoking a resource according to an embodiment of the disclosure.
FIG. 14 is a block diagram illustrating an apparatus for invoking a resource according to an embodiment of the disclosure.
FIG. 15 is a block diagram illustrating an apparatus for invoking a resource according to an embodiment of the disclosure.
FIG. 16 is a block diagram illustrating a communication device according to an embodiment of the disclosure.
FIG. 17 is a block diagram illustrating a chip according to an embodiment of the disclosure.

### DETAILED DESCRIPTION

Embodiments of the disclosure are described in detail below, and examples of embodiments are illustrated in the accompanying drawings, in which the same or similar symbols throughout indicate the same or similar elements. Embodiments described below with reference to the accompanying drawings are exemplary and are intended to be used to explain the disclosure and are not to be construed as a limitation of the disclosure.

One of objectives of a security study on subscriber-aware northbound application programming interface (API) access (SNA) application (APP) is obtaining authorization of a resource owner. Corresponding stage 1 requirement, in TS 22.261 [1] clause 6.10.2, states that "allow a user equipment (UE) to provide/revoke consent for information (e.g., location, presence) to be shared with the third-party". In this case, UE is the resource owner. The API invoker needs to obtain the authorization of the UE before requesting the resource (such as, location information of a specific UE). However, there is no existing mechanism to enable the UE to authorize the API invoker to request a resource of the UE in an API invocation scenario.

In this case, the disclosure provides a method and an apparatus for invoking a resource, to enable a UE to authorize an API invoker to request the resource of the UE in the API invocation scenario.

A method and an apparatus for invoking a resource provided in the disclosure is described in detail below with reference to the accompanying drawings.

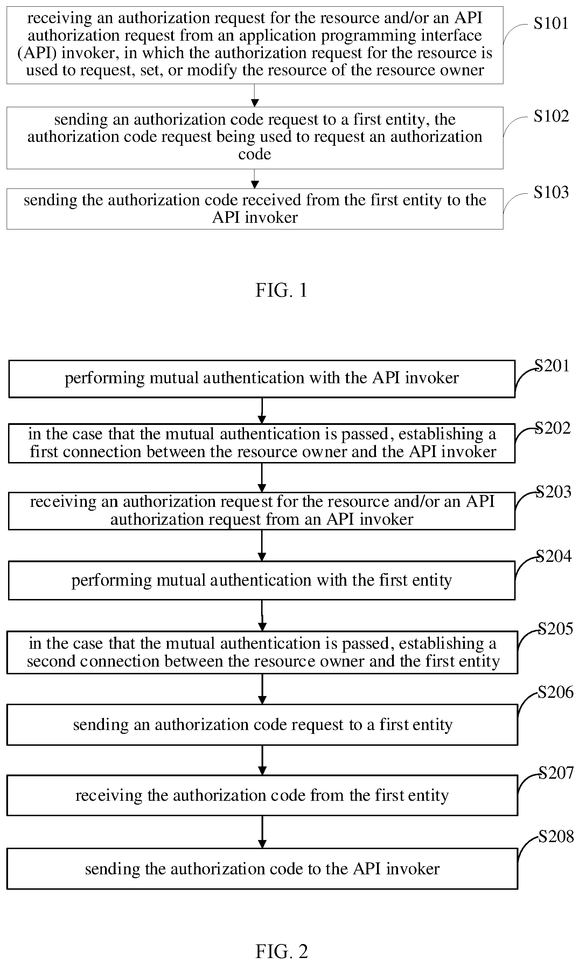

FIG. 1 is a flow chart illustrating a method for invoking a resource according to an embodiment of the disclosure. The method may be performed by a resource owner. In detail, the resource owner may be a UE. As illustrated in FIG. 1, the method may include the following.

At block S101, an authorization request for the resource and/or an API authorization request is received from an API invoker, in which the authorization request for the resource is used to request, set, or modify the resource of the resource owner.

In an embodiment of the disclosure, the API invoker may be a UE or an application function (AF). The API invoker may send the authorization request for the resource to a resource requester, to request the UE to authorize the API invoker to invoke the resource. The resource may be location information and/or quality of service (QoS) of the resource owner.

In some embodiments of the disclosure, the resource owner may also receive the API authorization request from the API invoker, which is specific to a situation where the API invoker does not obtain the API authorization.

At block S102, an authorization code request is sent to a first entity, the authorization code request being used to request an authorization code.

In an embodiment of the disclosure, the first entity is a common application programming interface framework (CAPIF) core function (CCF)/authorization function. The resource owner may request the authorization code from the first entity by sending the authorization code request to the first entity.

It may be understood that the authorization code may be understood as a certificate that authorizes the API invoker to invoke the resource of the resource owner in the API invocation scenario.

At block S103, the authorization code received from the first entity is sent to the API invoker.

In an embodiment of the disclosure, the resource owner may receive the authorization code requested from the first entity and send the authorization code to the API invoker for the API invoker to perform a subsequent process, such as redeeming a token.

It should be understood that during the UE authorizes the API invoker to request the resource of the UE, the token is available to access the resource without performing identity authentication. In the case that the resource owner receives the token, the resource owner may impersonate the API invoker to modify the data and falsely accuse the modification as being done by the API invoker. Thus, with the disclosure, the resource owner is isolated from contacting the token by the authorization code, such that the resource owner may not contact the token that authorizes the API invoker to invoke the resource, thus ensuring the feasibility and security of the UE authorizing the API invoker to request the resource of the UE.

In conclusion, according to the method for invoking a resource provided in the disclosure, the resource owner may receive the authorization request for the resource and/or the API authorization request from the API invoker, in which the authorization request for the resource is used to request, set, or modify the resource of the resource owner, and send the authorization code request to the first entity, the authorization code request being used to request the authorization code. The resource owner may send the authorization code received from the first entity to the API invoker. With the solution in the disclosure provides, it is realized that the UE may authorize the API invoker to request the resource of the UE in the API invocation scenario, and it is avoided that the data is tampered by the resource owner during the authorization process.

FIG. 2 is a flow chart illustrating a method for invoking a resource according to an embodiment of the disclosure. The method may be performed by a resource owner. Based on embodiments illustrated in FIG. 1, as illustrated in FIG. 2, the method may include the following.

At block S201, mutual authentication is performed with an API invoker.

In some alternative embodiments, performing the mutual authentication with the API invoker may be performed in the following ways.

In a way, in the case that the API invoker is a UE, the mutual authentication is performed with the API invoker based on a certificate.

In another way, in the case that the API invoker is an AF, the mutual authentication is performed using a generic bootstrapping architecture (GBA)-based authentication mechanism, an authentication and key management for applications (AKMA)-based authentication mechanism, or a certificate-based authentication mechanism.

In detail, the mutual authentication may be performed between the API invoker and the resource owner. In the case that the API invoker is the UE, the mutual authentication may be performed based on a certificate. In the case that the API invoker is the AF, the mutual authentication may be performed using the GBA-based authentication mechanism, the AKMA-based authentication mechanism, or the certificate-based authentication mechanism.

At block S202, in the case that the mutual authentication is passed, a first connection between the resource owner and the API invoker is established.

In the disclosure, the first connection is a secure connection for transmitting the authorization request for the resource and/or the API authorization request.

It may be understood that the secure connection between the resource owner and the API invoker is established after the mutual authentication is passed. The secure connection may be a secure transport layer security (TLS) connection, i.e., a secure connection established based on the TLS protocol.

In the disclosure, an objective of performing the mutual authentication between the resource owner and the API invoker and establishing the secure connection is that the resource invoker needs to verify that identity information of the API invoker in the request is the same as information that has verified or may be mapped to information that has verified. For example, if the resource owner verifies a cell phone number of the API invoker, but a request sent includes a corresponding WeChat ID, the request may still be granted.

At block S203, an authorization request for the resource and/or an API authorization request is received from the API invoker.

In an embodiment of the disclosure, the authorization request for the resource is used to request, set, or modify the resource of the resource owner.

In the disclosure, different requests may be sent for different cases whether the API invoker obtains an API authorization.

In an embodiment, in the case that the API invoker obtains authorization of a service, the authorization request for the resource is received from the API invoker. The authorization request for the resource includes at least one of: an API invoker identity (ID), a resource owner ID, or a target resource ID. That is, in the case that the API invoker obtains the authorization of the service, the request sent by the API invoker to the resource owner includes the API invoker ID (such as, a global public subscriber ID (GPSI), an IP multimedia private ID (IMPI) or an application layer ID), the resource owner (such as the UE) ID (such as, a GPSI, an IMPI or an application layer ID), the target resource ID (such as, location of a target UE, quality of service (QoS) of the target UE).

In another embodiment, in the case that the API invoker does not obtain an authorization of a service, the authorization request for the resource and the API authorization request are received from the API invoker. The authorization request for the resource includes at least one of: an API invoker ID, a resource owner ID, or a target resource ID, and the API authorization request includes a service identifier. That is, in the case that the API invoker does not obtain the authorization of the service, the request sent by the API invoker to the resource owner includes the service identifier in addition to including the API invoker ID, the resource owner ID and the target resource ID.

In an embodiment of the disclosure, the service identifier includes at least one of: a service name identifier; a service operation identifier; an operation semantic identifier; or an API ID.

It may be understood that, in the case that the API invoker obtains authorization of the service, i.e., in the case that the API invoker only sends the authorization request for the resource and the authorization request for the resource sent to the resource owner from the API invoker is granted, a token generated by the first entity based on the authorization code only includes resource related authorization information.

At block S204, mutual authentication is performed with the first entity.

In an embodiment of the disclosure, the resource owner may perform the mutual authentication with the first entity based on at least one of the following authentication mechanisms: the certificate-based authentication mechanism; the GBA-based authentication mechanism; the AKMA-based authentication mechanism; a transport layer security with pre-shared key (TLS-PSK); or an open authorization (OAuth) token-based authentication mechanism.

In detail, different authentication profiles may be employed for different cases where the first entity is a CCF and the first entity is an authorization function. In the case that the first entity is the CCF, the resource owner may authenticate the CCF by a certificate. Then the CCF may authenticate the resource owner using the GBA-based authentication mechanism, the AKMA-based authentication mechanism, or the certificate based authentication mechanism. The CCF may also generate a certificate and an OAuth 2.0 token for the resource owner after the authentication. In the case that the first entity is the authorization function, the resource owner may authenticate the authorization function by a certificate. Then the authorization function may authenticate the resource owner using the TLS-PSK, the OAuth token-based authentication mechanism, the GBA-based authentication mechanism, the AKMA-based authentication mechanism, or the certificate-based authentication mechanism, in which the certificate may be assigned by the CCF.

At block S205, in the case that the mutual authentication is passed, a second connection between the resource owner and the first entity is established.

The second connection is a secure connection for transmitting the authorization code request and a response. It may be understood that the secure connection between the resource owner and the CCF/authorization function is established after the mutual authentication is passed. The secure connection may be a TLS connection, i.e., a secure connection established based on the TLS protocol.

At block S206, the authorization code request is sent to the first entity.

In an embodiment of the disclosure, the resource owner may implement sending the authorization code request to the first entity in a synchronous manner or in an asynchronous manner.

In the case that the authorization code request is sent to the first entity synchronously, in an example, the resource owner grants the authorization request for the resource timely and sends the authorization code request to the first entity. That is, the resource owner may timely and synchronously grants the authorization request for the resource. The resource owner sends the authorization request and the authorization information to the first entity to request the authorization code.

In the case that the authorization code request is sent to the first entity asynchronously, in another example, the resource owner grants the authorization request for the resource asynchronously based on a local profile of the resource owner, and sends the authorization code request to the first entity. That is, the resource owner may asynchronously grant the authorization request for the resource based on a pre-generated profile in local, without responding timely. The resource owner sends the authorization request and the authorization information to the first entity to request the authorization code.

In another case that the authorization code request is sent to the first entity asynchronously, in another example, the resource owner sends the local profile and/or the authorization code request to the first entity, in which the local profile is used to assist the first entity to asynchronously grant the authorization request for the resource. That is, in the case that the resource owner previously sends the pre-generated profile to the first entity, the resource owner sends the authorization request to the first entity to request the authorization code. The first entity may authorize the authorization request for the resource based on the pre-generated profile. It may be understood that there is no sequence or binding between sending the authorization code request and sending the local profile, and the resource owner may send the local profile before, after or simultaneously with sending the authorization code request, which is not limited in the disclosure.

At block S207, the authorization code is received from the first entity.

In detail, in the case that the authorization request for the resource is authorized and the API invoker obtains the authorization of the service, the resource owner receives the authorization code from the first entity.

It should be understood that the first entity determines whether or not to send the authorization code. That is, in the case that both the request for the resource and the API authorization are granted, the first entity generates and sends the authorization code to the resource owner. In detail, in the case that the API invoker obtains the authorization of the service, the first entity generates the authorization code for the API invoker when the API invoker is authorized to request the resource. That is, in the case the resource access is granted and the API invoker does not request the authorization related to the API (the API invoker does not need to request the authorization again if the API invoker obtains the API authorization previously), the first entity sends the authorization code to request the resource. In the case that the API invoker does not obtain the authorization of the service, the first entity checks whether the API invoker is authorized to invoke the service based on the pre-configured profile. In the case that the API invoker is authorized to invoke the service and the resource, the first entity generates the authorization code for the API. That is, in the case that the resource access is granted, but the API invoker needs the authorization of the API, the first entity may determine whether the API invoker may access the API based on a pre-configured profile of the operator. In the case that the API invoker may access the API, the first entity generates and sends the authorization code. In the case that the API invoker may not access the API, the first entity does not send the authorization code.

At block S208, the authorization code is sent to the API invoker.

In an embodiment of the disclosure, after the authorization code is received from the first entity, the resource owner sends the authorization code to the API invoker for subsequent redemption of the token.

It should be understood that the actions at above blocks S201, S202, S204, and S205 are optional. That is, the request and the response message in the disclosure may be delivered without identity authentication and without establishing the secure connection.

In conclusion, according to the method for invoking the resource provided in the disclosure, the resource owner may perform mutual authentication with the API invoker and the first entity. The resource owner may receive the authorization request for the resource and/or the API authorization request from the API invoker and send the authorization code request to the first entity, in which the authorization code request being used to request the authorization code. The resource owner may send the authorization code received from the first entity to the API invoker. With the solution provided in the disclosure, it is realized that the UE may authorize the API invoker to request the resource of the UE in the API invocation scenario, and it is avoided that data is tampered by the resource owner during the authorization process.

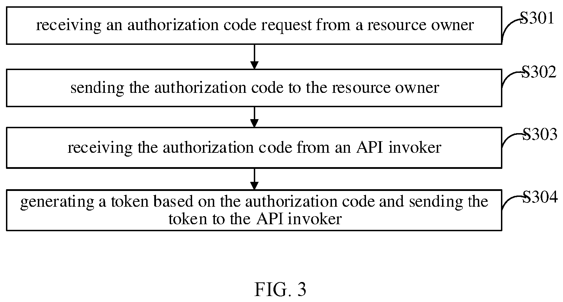

FIG. 3 is a flow chart illustrating a method for invoking a resource according to an embodiment of the disclosure. The method may be performed by a first entity. In detailed, as described above, the first entity may be a CCF/authorization function. As illustrated in FIG. 3, the method may include the following.

At block S301, an authorization code request is received from a resource owner.

In the disclosure, the authorization code request is used to request an authorization code. It may be understood that the authorization code may be understood as a certificate that authorizes an API invoker to invoke a resource of the resource owner in an API invocation scenario.

At block S302, the authorization code is sent to the resource owner.

In an embodiment of the disclosure, in the case that a specific condition is met, the first entity may generate the authorization code and send the authorization code to the resource owner. The specific condition is that both the resource access and the API authorization are granted.

At block S303, the authorization code is received from the API invoker.

In an embodiment of the disclosure, after the authorization code is sent to the resource owner, the authorization code is sent to the API invoker by the resource owner. The first entity receives the authorization code from the API invoker to redeem a token.

At block S304, a token is generated based on the authorization code and sent to the API invoker.

In an embodiment of the disclosure, the first entity generates the token based on the authorization code and sends the token to the API invoker to enable the API invoker to perform a subsequent process.

In conclusion, according to the method for invoking the resource provided in the disclosure, the first entity may receive the authorization code request from the resource owner and generate the authorization code in response to the request and send the authorization code to the resource owner, receive the authorization code from the API invoker, and generate the token based on the authorization code and send the token to the API invoker. With the solution provided in the disclosure, it may be realized that the UE may authorize the API invoker to request the resource of the UE in the API invocation scenario, and it is avoided that data is tampered by the resource owner during the authorization process.

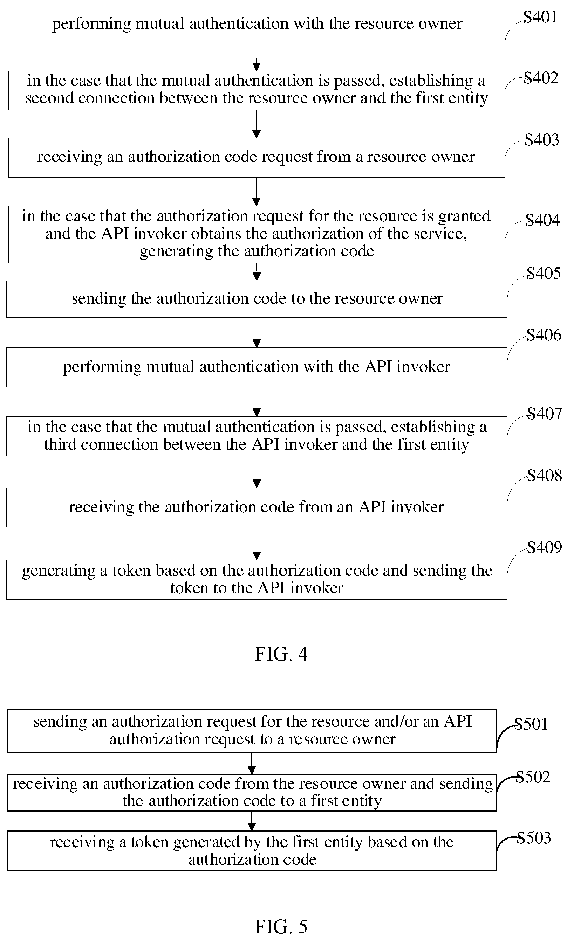

FIG. 4 is a flow chart illustrating a method for invoking a resource according to an embodiment of the disclosure. The method may be performed by a first entity. Based on embodiments illustrated in FIG. 3, as illustrated in FIG. 4, the method may include the following.

At block S401, mutual authentication is performed with the resource owner.

In an embodiment of the disclosure, the first entity may perform the mutual authentication with the resource owner based on at least one of the following authentication mechanisms: a certificate-based authentication mechanism; a GBA-based authentication mechanism; an AKMA-based authentication mechanism; a TLS-PSK; or an OAuth token-based authentication mechanism.

In detail, different authentication profiles may be employed for different cases where the first entity is a CCF and the first entity is an authorization function. In the case that the first entity is the CCF, the resource owner may authenticate the CCF by a certificate. Then the CCF may authenticate the resource owner using the GBA-based authentication mechanism, the AKMA-based authentication mechanism, or the certificate based authentication mechanism. The CCF may also generate a certificate and an OAuth 2.0 token for the resource owner after the authentication. In the case that the first entity is the authorization function, the resource owner may authenticate the authorization function by a certificate. Then the authorization function may authenticate the resource owner using the TLS-PSK, the OAuth token-based authentication mechanism, the GBA-based authentication mechanism, the AKMA-based authentication mechanism, or the certificate-based authentication mechanism, in which the certificate may be assigned by the CCF.

At block S402, in the case that the mutual authentication is passed, a second connection between the resource owner and the first entity is established.

The second connection is a secure connection for transmitting the authorization code request and a response. It may be understood that the secure connection between the resource owner and the CCF/authorization function is established after the mutual authentication is passed. The secure connection may be a TLS connection, i.e., a secure connection established based on the TLS protocol.

At block S403, the authorization code request is received from the resource owner.

In an embodiment of the disclosure, the resource owner may realize sending the authorization code request to the first entity in a synchronous manner or in an asynchronous manner. That is, the resource owner may process the request for the resource in different manners.
1. The resource owner grants the request based on a local profile.

For a synchronous case, in an example, the first entity receives the authorization code request based on a timely grant of the authorization request for the resource by the resource owner. The resource owner grants the authorization request for the resource timely and sends the authorization code request to the first entity. That is, the resource owner may timely and synchronously grants the authorization request for the resource. The resource owner sends the authorization request and the authorization information to the first entity to request the authorization code.

2. The resource owner grants the request timely.

For an asynchronous case, in another example, the first entity may receive the authorization code request based on an asynchronous grant of the resource owner on the authorization request for the resource. The resource owner grants the authorization request for the resource asynchronously based on the local profile of the resource owner, and sends the authorization code request to the first entity. That is, the resource owner may asynchronously grant the authorization request for the resource based on the pre-generated profile in local, without responding timely. The resource owner sends the authorization request and the authorization information to the first entity to request the authorization code.

3. The resource owner sends the profile to the CCF/authorization function, the authorization function unifies the request based on the profile.

For another asynchronous case, in another example, the first entity receives the local profile and/or the authorization code request from the resource owner and grants the authorization request for the resource asynchronously. The resource owner sends the local profile and/or the authorization code request to the first entity, in which the local profile is used to assist the first entity to asynchronously grant the authorization request for the resource. That is, in the case that the resource owner previously sends the pre-generated profile to the first entity, the resource owner sends the authorization request to the first entity to request the authorization code. The first entity may authorize the authorization request for the resource based on the pre-generated profile. It may be understood that there is no sequence or binding between sending the authorization code request and sending the local profile, and the resource owner may send the local profile before, after or simultaneously with sending the authorization code request, which is not limited in the disclosure.

At block S404, in the case that the authorization request for the resource is granted and the API invoker obtains the authorization of the service, the authorization code is generated.

In detail, in the case that the authorization request for the resource is granted and the API invoker obtains the authorization of the service, the first entity may generate the authorization code.

It should be understood that the first entity determines whether or not to generate the authorization code. That is, in the case that both the request for the resource and the API authorization are granted, the first entity generates and sends the authorization code to the resource owner. In detail, in the case that the API invoker obtains the authorization of the service, the first entity generates the authorization code for the API invoker when the API invoker is authorized to request the resource. That is, in the case that the resource access is granted and the API invoker does not request the authorization related to the API (the API invoker does not need to request the authorization again if the API invoker obtains the API authorization previously), the first entity sends the authorization code to request the resource.

In particular, the step further includes: in the case that the authorization request for the resource is granted but the API invoker does not obtain the authorization of the service, determining whether an authorization request for the service of the API invoker is granted based on a pre-configured profile; and in the case that the authorization request for the service of the API invoker is granted, generating the authorization code.

That is, in the case that the API invoker does not obtain the authorization of the service, the first entity checks whether the API invoker is authorized to invoke the service based on the pre-configured profile. In the case that the API invoker is authorized to invoke the service and the resource, the first entity generates the authorization code for the API. That is, in the case that the resource access is granted, but the API invoker needs the API authorization, the first entity may determine whether the API invoker may access the API based on the pre-configured profile of the operator. In the case that the API invoker may access the API, the first entity generates and sends the authorization code. In the case that the API invoker may not access the API, the first entity does not send the authorization code.

At block S405, the authorization code is sent to the resource owner.

In an embodiment of the disclosure, in the case that a specific condition is met, the first entity may generate the authorization code and send the authorization code to the resource owner. As described in the previous step, the specific condition is that both the resource access and the API authorization are granted.

At block S406, mutual authentication is performed with the API invoker.

In an embodiment of the disclosure, the first entity may perform the mutual authentication with the API invoker based on at least one of the following authentication mechanisms: the certificate-based authentication mechanism; the GBA-based authentication mechanism; the AKMA-based authentication mechanism; the TLS-PSK; or the OAuth token-based authentication mechanism.

In detail, different authentication profiles may be employed for different cases where the first entity is a CCF and the first entity is an authorization function. In the case that the first entity is the CCF, the resource owner may authenticate the CCF by a certificate. Then the CCF may authenticate the resource owner using the GBA-based authentication mechanism, the AKMA-based authentication mechanism, or the certificate based authentication mechanism. The CCF may also generate a certificate and an OAuth 2.0 token for the resource owner after the authentication. In the case that the first entity is the authorization function, the resource owner may authenticate the authorization function by a certificate. Then the authorization function may authenticate the resource owner using the TLS-PSK, the OAuth token-based authentication mechanism, the GBA-based authentication mechanism, the AKMA-based authentication mechanism, or the certificate-based authentication mechanism, in which the certificate may be assigned by the CCF.

At block S407, in the case that the mutual authentication is passed, a third connection between the API invoker and the first entity is established.

The third connection is a secure connection for transmitting the authorization code. It may be understood that the secure connection is established after the mutual authentication is passed. The secure connection may be a TLS connection, i.e., a secure connection established based on the TLS protocol.

At block S408, the authorization code is received from the API invoker.

In an embodiment of the disclosure, the first entity may receive the authorization code from the API invoker. It may be understood that after the first entity sends the authorization code to the resource owner, the resource owner sends the authorization code to the API invoker, and the API invoker sends the authorization code to the first entity for subsequent redemption of the token.

At block S409, a token is generated based on the authorization code, and the token is sent to the API invoker.

In an embodiment of the disclosure, the first entity may generate and send the token to the API invoker in the following ways.

In an embodiment, the first entity sends an access token and/or a refresh token to the API invoker.

In another embodiment, the first entity receives the refresh token from the API invoker and sends the access token to the API invoker based on the refresh token.

That is, the first entity may send the refresh token/access token directly to the API invoker, or the API invoker may obtain the access token by sending the refresh token to the first entity.

In an embodiment of the disclosure, the access token includes a CCF ID (such as, a network function (NF) instance ID, an NF ID), an authorization function ID (such as, an NF instance ID, an NF ID), a second entity ID (such as, an NF instance ID, an NF ID), a service identifier, an API invoker ID (such as, a GPSI, an IMPI, an application layer ID), a resource owner ID (such as, a GPSI, an IMPI, an application layer ID), a resource identifier (such as, a location), an expire time. The second entity is an API exposing function (AEF).

It should be understood that the actions at above blocks S401, S402, S406, and S407 are optional. That is, the request and the response message in the disclosure may be delivered without identity authentication and without establishing a secure connection.

In conclusion, according to the method for invoking the resource provided in the disclosure, the first entity may perform the mutual authentication with the resource owner and the API invoker. The first entity may receive the authorization code request from the resource owner and generate the authorization code in response to the request and send the authorization code to the resource owner, receive the authorization code from the API invoker, and generate the token based on the authorization code and send the token to the API invoker. With the solution provided in the disclosure, it may be realized that the UE may authorize the API invoker to request the resource of the UE in the API invocation scenario, and it may be avoided that data is tampered by the resource owner during the authorization process.

FIG. 5 is a flow chart illustrating a method for invoking a resource according to an embodiment of the disclosure. The method may be performed by an API invoker. As described above, the API invoker may be a UE or an AF. As illustrated in FIG. 5, the method may include the following.

At block S501, an authorization request for the resource and/or an API authorization request is sent to a resource owner.

In the disclosure, the authorization request for the resource is used to request, set, or modify the resource of the resource owner. The resource may be location information and/or quality of service (QoS) of the resource owner.

In an embodiment of the disclosure, in the case that the API invoker represents different entities, a requested resource may include different contents. In detailed, in the case that the API invoker is a UE, the resource includes parameters of the UE in a personal IoT network (PIN.) For example, in the case that the UE is PIN elements with management capability (PEMC), the resource may be QoS of the PEMC. In the case that the UE is PIN elements with gateway capability (PEGC), the resource may be quality of service of the PEGC. In the case that the UE is the PEGC, the resource may be QoS of a PIN element subordinate to the PEGC, which is not limited in the disclosure.

In some embodiments of the disclosure, in the case that the API invoker does not obtain the API authorization, the API invoker may also send the API authorization request to the resource owner.

At block S502, an authorization code is received from the resource owner and the authorization code is sent to the first entity.

It may be understood that the authorization code may be understood as a certificate that authorizes the API invoker to invoke the resource of the resource owner in an API invocation scenario.

In an embodiment of the disclosure, in the case that a specific condition is met, the first entity may generate the authorization code and send the authorization code to the resource owner. The specific condition is that both the resource access and the API authorization are granted. Then the resource owner sends the authorization code to the API invoker, and the API invoker may send the authorization code to the first entity to redeem the token after receiving the authorization code.

At block S503, a token generated by the first entity based on the authorization code is received.

In an embodiment of the disclosure, the first entity generates the token based on the authorization code and sends the token to the API invoker to enable the API invoker to perform a subsequent process.

In conclusion, according to the method for invoking the resource provided in the disclosure, the API invoker may send the authorization request for the resource and/or the API authorization request to the resource owner, in which the authorization request for the resource is used to request, set, or modify the resource of the resource owner, receive the authorization code sent from the resource owner and send the authorization code to the first entity, and receive the token generated by the first entity based on the authorization code. With the solution provided in the disclosure, it is realized that the UE may authorize the API invoker to request the resource of the UE in the API invocation scenario, and it is avoided that data is tampered by the resource owner during the authorization process.

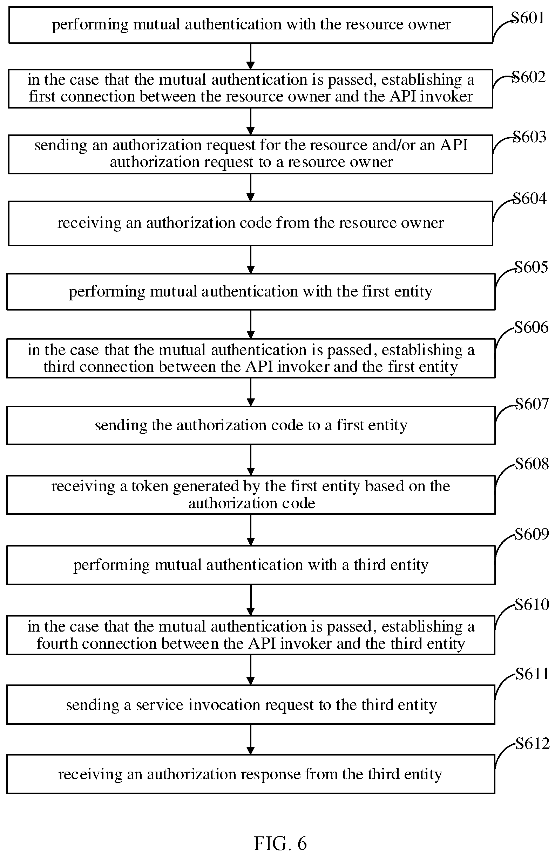

FIG. 6 is a flow chart illustrating a method for invoking a resource according to an embodiment of the disclosure. The method may be performed by an API invoker. Based on embodiments illustrated in FIG. 5, as illustrated in FIG. 6, the method may include the following.

At block S601, mutual authentication is performed with a resource owner.

In an embodiment of the disclosure, the mutual authentication between the API invoker and the resource owner may be performed in the following ways.

In a way, in the case that the API invoker is a UE, the mutual authentication is performed with the API invoker based on a certificate.

In another way, in the case that the API invoker is an AF, the mutual authentication is performed using a GBA-based authentication mechanism, an AKMA-based authentication mechanism, or a certificate-based authentication mechanism.

In detailed, the mutual authentication may be performed between the API invoker and the resource owner. In the case that the API invoker is the UE, the mutual authentication may be performed with the API invoker based on a certificate. In the case that the API invoker is an AF, the mutual authentication may be performed using the GBA-based authentication mechanism, the AKMA-based authentication mechanism, or the certificate-based authentication mechanism.

At block S602, in the case that the mutual authentication is passed, a first connection between the resource owner and the API invoker is established.

In the disclosure, the first connection is a secure connection for transmitting the authorization request for the resource and/or the API authorization request.

It may be understood that the secure connection between the resource owner and the API invoker is established after the mutual authentication is passed. The secure connection may be a TLS connection, i.e., a secure connection established based on the TLS protocol.

In the disclosure, an objective of performing the mutual authentication between the resource owner and the API invoker and establishing the secure connection is that the resource invoker needs to check that identity information of the API invoker in the request is the same as verified information, or may be mapped to verified information. For example, in the case that the resource owner verifies a cell phone number of the API invoker, but a request sent includes a corresponding WeChat ID, the request may still be granted.

At block S603, an authorization request for the resource and/or an API authorization request is sent to the resource owner.

In an embodiment of the disclosure, the authorization request for the resource is used to request, set, or modify the resource of the resource owner.

In the disclosure, different requests may be sent for different cases whether the API invoker obtains an API authorization.

In an embodiment, in the case that the API invoker obtains authorization of a service, the authorization request for the resource is received from the API invoker. The authorization request for the resource includes at least one of: an API invoker ID, a resource owner ID, or a target resource ID. That is, in the case that the API invoker obtains the authorization of the service, the request sent by the API invoker to the resource owner includes the API invoker ID (such as, a global public subscriber ID (GPSI), an IP multimedia private ID (IMPI) or an application layer ID), the resource owner (such as the UE) ID (such as, a GPSI, an IMPI or an application layer ID), the target resource ID (such as, location of a target UE, quality of service (QoS) of the target UE).

In another embodiment, in the case that the API invoker does not obtain an authorization of a service, the authorization request for the resource and the API authorization request are received from the API invoker. The authorization request for the resource includes at least one of: an API invoker ID, a resource owner ID, or a target resource ID, and the API authorization request includes a service identifier. That is, in the case that the API invoker does not obtain the authorization of the service, the request sent by the API invoker to the resource owner includes the service identifier in addition to including the API invoker ID, the resource owner ID and the target resource ID.

It may be understood that, in the case that the API invoker obtains authorization of the service, i.e., in the case that the API invoker sends only an authorization request for the resource, and the authorization request for the resource sent to the resource owner from the API invoker is granted, a token generated by the first entity based on the authorization code includes only authorization information related to the resource. At block S604, an authorization code is received from the resource owner.

It may be understood that the first entity may generate the authorization code and send the authorization code to the resource owner in the case that a specific condition is met. The specific condition is that both the resource access and the API authorization are granted. Then the resource owner sends the authorization code to the API invoker to redeem the token.

At block S605, mutual authentication is performed with the first entity.

In an embodiment of the disclosure, the first entity may perform the mutual authentication with the API invoker based on at least one of the following authentication mechanisms: the certificate-based authentication mechanism; the GBA-based authentication mechanism; the AKMA-based authentication mechanism; a TLS-PSK; or an OAuth token-based authentication mechanism.

In detail, different authentication profiles may be employed for different cases where the first entity is a CCF and the first entity is an authorization function. In the case that the first entity is the CCF, the resource owner may authenticate the CCF by a certificate. Then the CCF may authenticate the resource owner using the GBA-based authentication mechanism, the AKMA-based authentication mechanism, or the certificate based authentication mechanism. The CCF may also generate a certificate and an OAuth 2.0 token for the resource owner after the authentication. In the case that the first entity is the authorization function, the resource owner may authenticate the authorization function by a certificate. Then the authorization function may authenticate the resource owner using the TLS-PSK, the OAuth token-based authentication mechanism, the GBA-based authentication mechanism, the AKMA-based authentication mechanism, or the certificate-based authentication mechanism, in which the certificate may be assigned by the CCF.

At block S606, in the case that the mutual authentication is passed, a third connection between the API invoker and the first entity is established.

The third connection is a secure connection for transmitting the authorization code. It may be understood that the secure connection is established after the mutual authentication is passed. The secure connection may be a TLS connection, i.e., a secure connection established based on the TLS protocol.

At block S607, the authorization code is sent to the first entity.

In an embodiment of the disclosure, the first entity may receive the authorization code from the API invoker to redeem the token.

At block S608, a token generated by the first entity based on the authorization code is received.

In an embodiment of the disclosure, the first entity may generate and send the token to the API invoker in the following ways.

In an example, the first entity sends an access token and/or a refresh token to the API invoker.

In another example, the first entity receives the refresh token from the API invoker and sends the access token to the API invoker based on the refresh token.

That is, the first entity may send the refresh token/access token directly to the API invoker, or the API invoker may obtain the access token by sending the refresh token to the first entity.

In an embodiment of the disclosure, access token includes a CCF ID (such as, an NF instance ID, an NF ID), an authorization function ID (such as, an NF instance ID, an NF ID), a second entity ID (such as, an NF instance ID, an NF ID), a service identifier, an API invoker ID (such as, a GPSI, an IMPI, an application layer ID), a resource owner ID (such as, a GPSI, an IMPI, an application layer ID), a resource identifier (e.g., location), an expire time. The second entity is an AEF.

In the following, the API invoker interacts with the second entity.

At block S609, mutual authentication is performed with the second entity.

In an embodiment of the disclosure, the API invoker may perform the mutual authentication with the AEF based on at least one of the following authentication mechanisms: the certificate-based authentication mechanism; the GBA-based authentication mechanism; the AKMA-based authentication mechanism; the TLS-PSK; or the OAuth token-based authentication mechanism.

At block S610, in the case that the mutual authentication is passed, a fourth connection between the API invoker and the second entity is established.

The fourth connection is a secure connection for transmitting the authorization code. It may be understood that the secure connection is established after the mutual authentication is passed. The secure connection may be a TLS connection, i.e., a secure connection established based on the TLS protocol.

At block S611, a service invocation request is sent to the second entity.

In an embodiment of the disclosure, the service invocation request sent by the API invoker to the AEF includes: an API invoker ID, a resource owner ID, a service ID that needs to be invoked, a user resource ID that the API invoker needs to access, and an access token.

At block S612, an authorization response is received from the second entity.

In an embodiment of the disclosure, the AEF may authorize the request based on the token and send the response to the API invoker.

It should be understood that the actions at the above blocks S601, S602, S605, S606, S609, and S610 are optional. That is, the request and the response message in the disclosure may be delivered without identity authentication and without establishing a secure connection.

In conclusion, according to the method for invoking the resource provided in the disclosure, the API invoker may perform the mutual authentication with the resource owner, the first entity, and the second entity. The API invoker may send the authorization request for the resource and/or the API authorization request to the resource owner, in which the authorization request for the resource is used to request, set, or modify the resource of the resource owner, receive the authorization code sent from the resource owner and send the authorization code to the first entity, and receive the token generated by the first entity based on the authorization code. With the solution provided in the disclosure, it is realized that the UE may authorize the API invoker to request the resource of the UE in the API invocation scenario, and it is avoided that data is tampered by the resource owner during the authorization process.

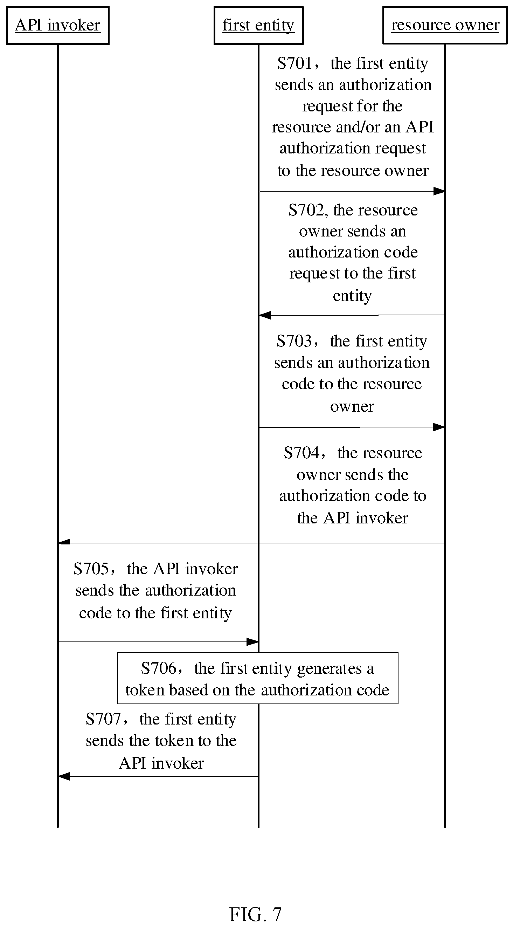

FIG. 7 is an interaction schematic diagram illustrating a method for invoking a resource according to an embodiment of the disclosure. The method may be performed by a communication system. The communication system includes at least a resource owner, a first entity, and an API invoker. As illustrated in FIG. 7, the method may include the following.

At S701, the first entity sends an authorization request for the resource and/or an API authorization request to the resource owner.

At S702, the resource owner sends an authorization code request to the first entity.

At S703, the first entity sends an authorization code to the resource owner.

At S704, the resource owner sends the authorization code to the API invoker.

At S705, the API invoker sends the authorization code to the first entity.

At S706, the first entity generates a token based on the authorization code.

At S707, the first entity sends the token to the API invoker.

The principle of the above actions is the same as that of the embodiments illustrated in FIG. 1 to FIG. 6, which is not repeated herein.

In conclusion, according to the method for invoking the resource provided in the disclosure, by the interaction between the API invoker, the resource owner, and the first entity, the UE may authorize the API invoker to request the resource of the UE in the API invocation scenario, thus avoiding that data is tampered by the resource owner during the authorization process.

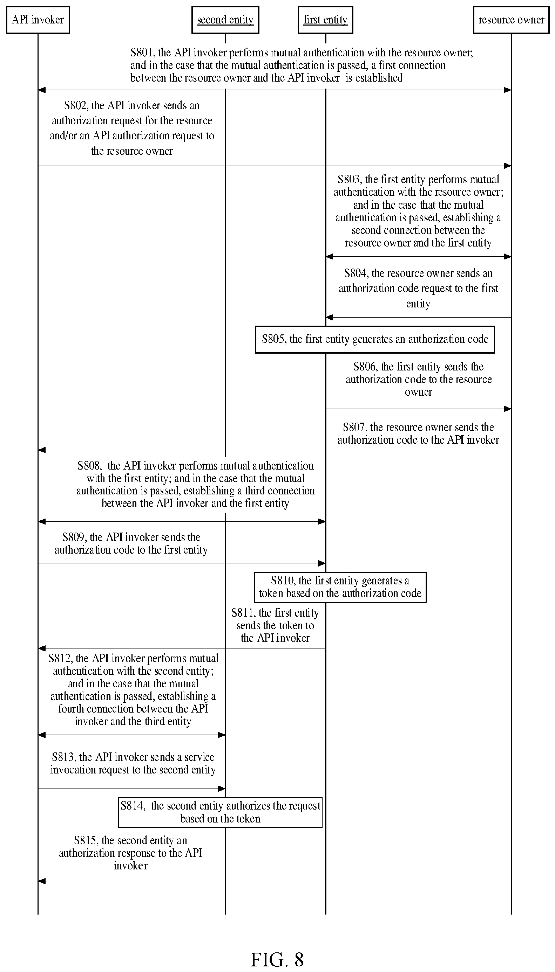

FIG. 8 is an interaction schematic diagram illustrating a method for invoking a resource according to an embodiment of the disclosure. The method may be performed by a communication system. Based on the embodiments illustrated in FIG. 7, the communication system at least includes a resource owner, a first entity, an API invoker, and a second entity. As illustrated in FIG. 8, the method may include the following.

At S801, the API invoker performs mutual authentication with the resource owner; and in the case that the mutual authentication is passed, a first connection between the resource owner and the API invoker is established.

At S802, the API invoker sends an authorization request for the resource and/or an API authorization request to the resource owner.

At S803, the first entity performs mutual authentication with the resource owner; and in the case that the mutual authentication is passed, a second connection between the resource owner and the first entity is established.

At S804, the resource owner sends an authorization code request to the first entity.

At S805, the first entity generates an authorization code.

At S806, the first entity sends the authorization code to the resource owner.

At S807, the resource owner sends the authorization code to the API invoker.

At S808, the API invoker performs mutual authentication with the first entity; and in the case that the mutual authentication is passed, a third connection between the API invoker and the first entity is established.

At S809, the API invoker sends the authorization code to the first entity.

At S810, the first entity generates a token based on the authorization code.

At S811, the first entity sends the token to the API invoker.

At S812, the API invoker performs mutual authentication with the second entity; and in the case that the mutual authentication is passed, a fourth connection between the API invoker and the third entity is established.

At S813, the API invoker sends a service invocation request to the second entity.

At S814, the second entity authorizes the request based on the token.

At S815, the second entity an authorization response to the API invoker.

The principle of the above actions is the same as that of the embodiments illustrated in FIG. 1 to FIG. 7, which is not repeated herein.

It should be understood that the above actions at S801, S803, S808, and S812 are optional. That is, the request and the response message in the disclosure may be delivered without identity authentication and without establishing a secure connection.

In conclusion, according to the method for invoking the resource provided in the disclosure, by the interaction between the API invoker, the resource owner, the first entity and the second entity, it is realized that the UE may authorize the API invoker to request the resource of the UE in the API invocation scenario, thus avoiding that data is tampered by the resource owner during the authorization process.

In the above embodiments provided in the disclosure, description is made to the method according to embodiments of the disclosure from the perspectives of the resource owner, the API invoker, and the first entity respectively. In order to realize each of the functions in the method according to the above embodiments of the disclosure, the resource owner, the API invoker, and the first entity may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

Corresponding to the method for invoking the resource provided in the above several embodiments, the disclosure also provides an apparatus for invoking a resource. Since the apparatus for invoking the resource provided in embodiments of the disclosure corresponds to the method for invoking the resource provided in the above several embodiments, the implementation of the method for invoking the resource is also applicable to the apparatus for invoking the resource provided in embodiments of the disclosure, which is not further described in detail in the embodiments.

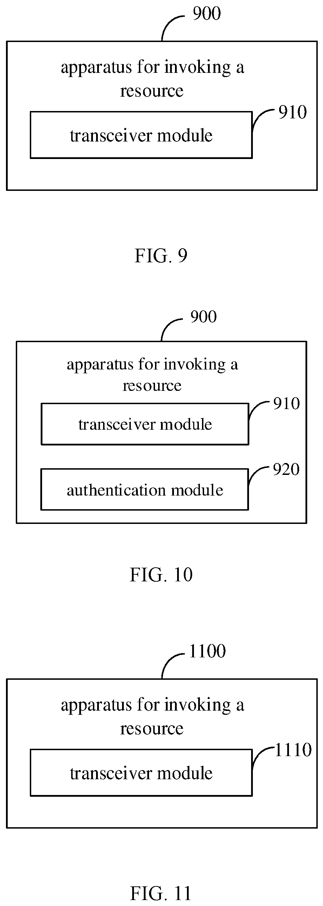

FIG. 9 is a block diagram illustrating an apparatus 900 for invoking a resource according to an embodiment of the disclosure. The apparatus 900 for invoking the resource is configured in a resource owner.

As illustrated in FIG. 9, the apparatus 900 includes a transceiver module 910. The transceiver module 910 is configured to receive an authorization request for the resource and/or an API authorization request from an API invoker, in which the authorization request for the resource is used to request, set, or modify the resource of the resource owner; send an authorization code request to a first entity, the authorization code request being used to request an authorization code; and send the authorization code received from the first entity to the API invoker.

According to the apparatus for invoking the resource provided in the disclosure, the resource owner may receive the authorization request for the resource and/or the API authorization request from the API invoker, in which the authorization request for the resource is used to request, set, or modify the resource of the resource owner, and send the authorization code request to the first entity, the authorization code request being used to request the authorization code. The resource owner may send the authorization code received from the first entity to the API invoker. With the solution provided in the disclosure, it is realized that the UE may authorize the API invoker to request the resource of the UE in the API invocation scenario, thus avoiding that data is tampered by the resource owner during the authorization process.

In some embodiments, as illustrated in FIG. 10, the apparatus 900 further includes an authentication module 920, configured to perform mutual authentication with the API invoker; and in the case that the mutual authentication is passed, establish a first connection between the resource owner and the API invoker.

In some embodiments, the authentication module 920 is further configured to, in the case that the API invoker is a UE, perform the mutual authentication with the API invoker based on a certificate; or in the case that the API invoker is an AF, perform the mutual authentication using a GBA-based authentication mechanism, an AKMA-based authentication mechanism, or a certificate-based authentication mechanism.

In some embodiments, the transceiver module 910 is further configured to, in the case that the API invoker obtains authorization of a service, receive the authorization request for the resource from the API invoker; and in the case that the API invoker does not obtain the authorization of the service, receive the authorization request for the resource and the API authorization request from the API invoker, in which the authorization request for the resource includes at least one of: an API invoker ID, a resource owner ID, or a target resource ID, and the API authorization request includes a service identifier.

In some embodiments, the authentication module 920 is further configured to perform mutual authentication with the first entity; and in the case that the mutual authentication is passed, establish a second connection between the resource owner and the first entity, in which the second connection is a secure connection for transmitting the authorization code request and a response.

In some embodiments, the authentication module 920 is further configured to perform the mutual authentication based on at least one of the following authentication mechanisms: the certificate-based authentication mechanism; the GBA-based authentication mechanism; the AKMA-based authentication mechanism; a TLS-PSK; or an OAuth token-based authentication mechanism.

In some embodiments, the transceiver module 910 is further configured to grant the authorization request for the resource timely and sending the authorization code request to the first entity; grant the authorization request for the resource asynchronously based on a local profile of the resource owner, and sending the authorization code request to the first entity; and send a local profile and/or the authorization code request to the first entity, in which the local profile is used to assist the first entity to asynchronously grant the authorization request for the resource.

In some embodiments, the transceiver module 910 is further configured to, in the case that the authorization request for the resource is authorized and the API invoker obtains the authorization of the service, receive the authorization code from the first entity.

In some embodiments, the resource owner is a UE and the resource is quality of service and/or location information of the UE.

In conclusion, according to the method for invoking the resource provided in the disclosure, the resource owner may perform the mutual authentication with the API invoker and the first entity. The resource owner may receive the authorization request for the resource and/or the API authorization request from the API invoker and send the authorization code request to the first entity, in which the authorization code request is used to request the authorization code. The resource owner may send the authorization code received from the first entity to the API invoker. With the solution provided in the disclosure, it is realized that the UE may authorize the API invoker to request the resource of the UE in the API invocation scenario, thus avoiding that data is tampered by the resource owner during the authorization process.

FIG. 11 is a block diagram illustrating an apparatus 1100 for invoking a resource according to an embodiment of the disclosure. The apparatus 1100 for invoking the resource is configured in a first entity.

As illustrated in FIG. 11, the apparatus 1100 includes a transceiver module 1110. The transceiver module 1110 is configured to receive an authorization code request from a resource owner, the authorization code request being used to request an authorization code; send the authorization code to the resource owner; receive the authorization code from an API invoker; and generate a token based on the authorization code and send the token to the API invoker.

According to the apparatus for invoking the resource provided in the disclosure, the first entity may receive the authorization code request from the resource owner and generate the authorization code in response to the request and send the authorization code to the resource owner, receive the authorization code from the API invoker, and generate the token based on the authorization code and send the token to the API invoker. With the solution provided in the disclosure, it is realized that the UE may authorize the API invoker to request the resource of the UE in the API invocation scenario, and thus avoiding that data is tampered by the resource owner during the authorization process.

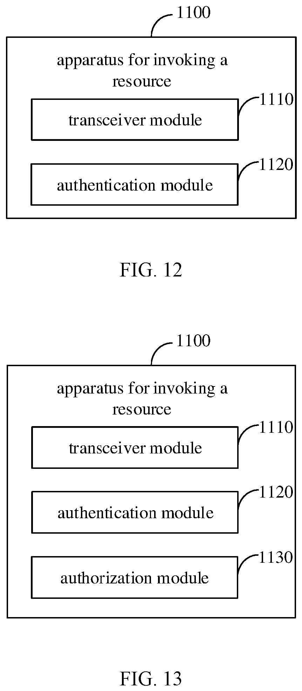

In some embodiments, as illustrated in FIG. 12, the apparatus 1100 further includes an authentication module 1120, configured to perform mutual authentication with the resource owner; and in the case that the mutual authentication is passed, establish a second connection between the resource owner and the first entity, in which the second connection is a secure connection for transmitting the authorization code request and a response.

In some embodiments, the authentication module 1120 is further configured to perform the mutual authentication based on at least one of the following authentication mechanisms: a certificate-based authentication mechanism; a GBA-based authentication mechanism; an AKMA-based authentication mechanism; a TLS-PSK; or an OAuth token-based authentication mechanism.

In some embodiments, the transceiver module 1110 is further configured to receive the authorization code request based on a timely grant of an authorization request for the resource by the resource owner; receive the authorization code request based on an asynchronously grant of the authorization request for the resource by the resource owner; and receive a local profile and/or the authorization code request from the resource owner, and grant the authorization request for the resource asynchronously.

In some embodiments, the transceiver module 1110 is further configured to, in the case that the authorization request for the resource is granted and the API invoker obtains the authorization of the service, generate the authorization code.

In some embodiments, as illustrated in FIG. 13, the apparatus 1100 further includes an authorization module 1130. The authorization module 1130 is configured to, in the case that the authorization request for the resource is granted but the API invoker does not obtain the authorization of the service, determine whether an authorization request for the service of the API invoker is granted based on a preset profile; and in the case that the authorization request for the service of the API invoker is granted, generate the authorization code.

In some embodiments, the authentication module 1120 is further configured to perform mutual authentication with the API invoker; and in the case that the mutual authentication is passed, establish a third connection between the API invoker and the first entity, in which the third connection is a secure connection for transmitting the authorization code.

In some embodiments, the authentication module 1120 is further configured to perform the mutual authentication based on at least one of the following authentication mechanisms: the certificate-based authentication mechanism; the GBA-based authentication mechanism; the AKMA-based authentication mechanism; the TLS-PSK; or the OAuth token-based authentication mechanism.

In some embodiments, the transceiver module 1110 is further configured to perform at least one of: sending an access token and/or a refresh token to the API invoker; and receiving the refresh token from the API invoker, and sending the access token to the API invoker based on the refresh token.

In some embodiments, first entity is a CAPIF core function or an authorization function.

According to the apparatus for invoking the resource provided in the disclosure, the first entity may perform the mutual authentication with the resource owner and the API invoker. The first entity may receive the authorization code request from the resource owner and generate the authorization code in response to the request and send the authorization code to the resource owner, receive the authorization code from the API invoker, and generate the token based on the authorization code and send the token to the API invoker. With the solution provided in the disclosure, it is realized that the UE may authorize the API invoker to request the resource of the UE in the API invocation scenario, thus avoiding that data is tampered by the resource owner during the authorization process.

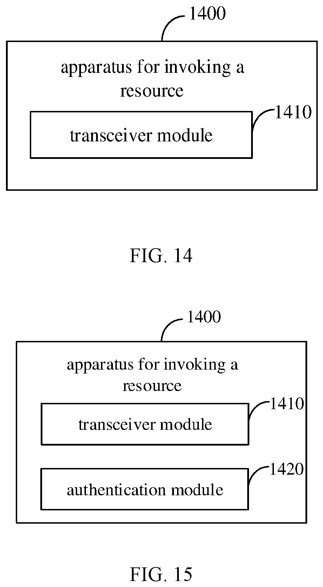

FIG. 14 is a block diagram illustrating an apparatus 1400 for invoking a resource according to an embodiment of the disclosure. The apparatus 1400 invoking the resource is configured in an API invoker.

As illustrated in FIG. 14, the apparatus 1400 includes a transceiver module 1410. The transceiver module 1410 is configured to send an authorization request for the resource and/or an API authorization request to a resource owner, in which the authorization request for the resource is used to request, set, or modify the resource of the resource owner; receive an authorization code from the resource owner and send the authorization code to a first entity; and receive a token generated by the first entity based on the authorization code.

According to the apparatus for invoking the resource provided in the disclosure, the API invoker may send the authorization request for the resource and/or the API authorization request to the resource owner, in which the authorization request for the resource is used to request, set, or modify the resource of the resource owner, receive the authorization code sent from the resource owner and send the authorization code to the first entity, and receive the token generated by the first entity based on the authorization code. With the solution provided in the disclosure, it is realized that the UE may authorize the API invoker to request the resource of the UE in the API invocation scenario, thus avoiding that data the tampered by the resource owner during the authorization process.

In some embodiments, as illustrated in FIG. 15, the apparatus 1400 further includes an authentication module 1420, configured to perform mutual authentication with the resource owner; and in the case that the mutual authentication is passed, establish a first connection between the resource owner and the API invoker, in which the first connection is a secure connection for transmitting the authorization request for the resource and/or the API authorization request.

In some embodiments, the authentication module 1420 is further configured to perform at least one of: in the case that the API invoker is a UE, performing the mutual authentication with the resource owner based on a certificate; or in the case that the API invoker is an AF, performing the mutual authentication with the resource owner using a GBA-based authentication mechanism, an AKMA-based authentication mechanism, or a certificate-based authentication mechanism.

In some embodiments, the transceiver module 1410 is further configured to, in the case that the API invoker obtains authorization of a service, send the authorization request for the resource to the resource owner; and in the case that the API invoker does not obtain the authorization of the service, send the authorization request for the resource and the API authorization request to the resource owner, in which the authorization request for the resource includes at least one of: an API invoker ID, a resource owner ID, or a target resource ID, and the API authorization request includes a service identifier.

In some embodiments, the authentication module 1420 is further configured to perform mutual authentication with the first entity; and in the case that the mutual authentication is passed, establish a third connection between the API invoker and the first entity, in which the third connection is a secure connection for transmitting the authorization code.

In some embodiments, the transceiver module 1410 is further configured to perform at least one of: receiving an access token and/or a refresh token from the first entity; or sending the refresh token to the first entity and receiving the access token from the first entity based on the refresh token.

In some embodiments, the API invoker is a UE or an AF, and the resource is quality of service and/or location information of the resource owner.

According to the apparatus for invoking the resource provided in the disclosure, the API invoker may perform the mutual authentication with the resource owner, the first entity, and the second entity. The API invoker may send the authorization request for the resource and/or the API authorization request to the resource owner, in which the authorization request for the resource is used to request, set, or modify the resource of the resource owner, receive the authorization code sent from the resource owner and send the authorization code to the first entity, and receive the token generated by the first entity based on the authorization code. With the solution provided in the disclosure, it is realized that the UE may authorize the API invoker to request the resource of the UE in the API invocation scenario, thus avoiding that data is tampered by the resource owner during the authorization process.

Embodiments of the disclosure also provide a communication system. The system includes a resource owner, an API invoker, and a first entity. The system includes an apparatus for invoking a resource as illustrated in the embodiments of FIG. 9 to FIG. 15, configured to perform the method for invoking the resource as illustrated in the embodiments of FIG. 1 to FIG. 8.

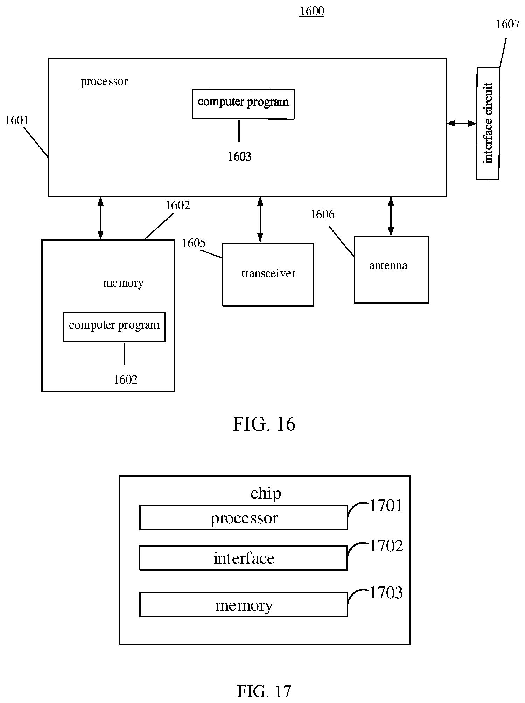

Referring to FIG. 16, FIG. 16 is a block diagram illustrating a communication device 1600 according to an embodiment of the disclosure. The communication device 1600 may be a network device, a UE, or a chip, a chip system or a processor that supports the network device to realize the above-described methods, or a chip, a chip system or a processor that supports the , to realize the above-described methods. The device may be configured to realize the methods described in the above method embodiments, and for details, please refer to the descriptions of the above-described method embodiments.

The communication device 1600 may include one or more processors 1601. The processor 1601 may be a general purpose processor or a dedicated processor, such as, a baseband processor or a central processor. The baseband processor is configured to process a communication protocol and communication data. The central processor is configured to control the communication device (such as, a base station, a baseband chip, a terminal, a terminal chip, a central unit (CU) or a distributed unit (DU)), to execute a computer program, and to process data of the computer program.

Alternatively, the communication device 1600 may include one or more memories 1602 on which a computer program 1604 may be stored. The processor 1601 executes the computer program 1604 to cause the communication device 1600 to execute the methods described in the above method embodiments. Alternatively, data may also be stored in the memory 1402 . The communication device 1600 and the memory 1602 may be provided separately or may be integrated together.

Alternatively, the communication device 1600 may also include a transceiver 1605 and an antenna 1606. The transceiver 1605 may be referred to as a transceiver unit, a transceiver machine, or a transceiver circuit, for realizing a receiving and sending function. The transceiver 1605 may include a receiver and a sender. The receiver may be referred to as a receiver machine or a receiving circuit, for realizing a receiving function. The sender may be referred to as a sending machine or sending circuit, for realizing the sending function.

Alternatively, the communication device 1600 may also include one or more interface circuits 1607. The interface circuits 1607 are configured to receive code instructions and transmit the code instructions to the processor 1601. The processor 1601 runs the code instructions to cause the communication device 1600 to execute the method described in the method embodiments.

In an implementation, the processor 1601 may include a transceiver for realizing the receiving and sending function. For example, the transceiver may be a transceiver circuit, an interface, or an interface circuit. The transceiver circuit, interface, or interface circuitry for realizing the receiving and sending function may be separated, or may be integrated together. The transceiver circuit, interface, or interface circuit described above may be configured for code/data reading and writing, or may be configured for signal sending or delivery.

In an implementation, the processor 1601 may store a computer program 1603. The processor 1601 executes the computer program 1603 to cause the communication device 1600 to execute the methods described in the above method embodiments. The computer program 1603 may be solidified in the processor 1601, in which case the processor 1601 may be realized by hardware.

In an implementation, the communication device 1600 may include circuits. The circuits may implement the sending, receiving or communicating function in the above method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), and an electronic device. The processor and transceiver may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be the network device or the terminal, but a scope of the communication device described in the disclosure is not limited thereto, and a structure of the communication device may not be limited by FIG. 16. The communication device may be a stand-alone device or may be some of a larger device. For example the communication device may be:
(1) a stand-alone IC, a chip, a chip system or a subsystem;
(2) a collection of ICs including one or more ICs, where alternatively, the collection of ICs may also include storage components for storing data and a computer program;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For the case where the communication device may be the chip or the chip system, please refer to the block diagram of the chip illustrated in FIG. 17. The chip illustrated in FIG. 17 includes a processor 1701 and an interface 1702. There may be one or more processors 1701, and there may be multiple interfaces 1702.

Alternatively, the chip further includes a memory 1703 configured to store necessary computer programs and data.

It may be understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of an entire system. Those skilled in the art may use various methods to realize the described function for each particular application, but such implementation should not be construed as being beyond the scope of protection of embodiments of the disclosure.

The disclosure also provides a readable storage medium for storing instructions. When the instructions are executed by a computer, the function of any of the method embodiments described above is realized.

The disclosure also provides a computer program product. When the computer program product is executed by a computer, the function of any of the method embodiments described above is realized.

The above embodiments may be implemented in whole or in part by software, hardware, firmware, or any combination of both. When implemented using software, the above embodiments may be implemented, in whole or in part, in the form of the computer program product. The computer program product includes one or more computer programs. When the computer program is loaded and executed on the computer, all or some of processes or functions described in the embodiments of the disclosure are realized. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or in a wireless manner (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that various numerical numbers such as first, second, and the like involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In embodiments of the disclosure, for a technical feature, the terms "first", "second", and "third"; and "A", "B", "C" and "D" and the like are used to distinguish different technical features, the technical features described using the terms "first", "second", and "third"; and "A", "B", "C" and "D" and the like do not indicate any order of precedence or magnitude.

As used herein, the terms "machine-readable medium" and "computer-readable medium" refer to any computer program product, device, and/or apparatus (e.g., disk, optical disk, memory, programmable logic device (PLD)) that is used to provide machine instructions and/or data to a programmable processor, including a machine-readable medium that receives machine instructions as machine-readable signals. The term "machine-readable signal" refers to any signal used to provide machine instructions and/or data to a programmable processor.

The system and technology described herein may be implemented in a computing system that includes backend components (e.g., as a data server), or in a computing system that includes middleware components (e.g., an application server), or in a computing system that includes frontend components (e.g., a user computer with a graphical user interface or a web browser, through which a user may interact with the system and technology described herein), or a computing system including any combination of backend components, middleware components, or frontend components. The components of the system may be interconnected via any form or digital data communication (e.g., a communication network) of medium. An examples of the communication network includes a local area networks (LAN), a wide area networks (WAN), and the internet.

A computer system may include both a clients and a server. The client and server are typically located remotely from each other and usually interact through a communication network. The client-server relationship is established by running computer programs on respective computers that have a client-server relationship with each other.

It should be understood that the various forms of processes illustrated above may be used to reorder, add or delete steps. For example, the steps described in the disclosure could be performed in parallel, sequentially, or in different orders, as long as the desired result of the technical solution disclosed in the disclosure is achieved, which is not limited herein.

In addition, it should be understood that various embodiments of the disclosure may be implemented individually or in combination with other embodiments as permitted by the solution.

Those skilled in the art may realize that the units and algorithmic steps of the various examples described in combination with the embodiments disclosed herein are capable of being realized in the form of the electronic hardware, or a combination of computer software and electronic hardware. Whether these functions are executed in hardware or software way depends on the particular application and design constraints of the technical solution. Those skilled in the art may use different ways to realize the described functions for each particular application, but such implementations should not be considered as beyond the scope of the disclosure.

It is clearly understood by those skilled in the field that, for the convenience and brevity of description, a detailed work process of the system, apparatus and unit described above may be referred to the corresponding process in the above method embodiments, which is not be repeated here.

The above is only detailed implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for invoking a resource, performed by a resource owner, comprising:
receiving an authorization request for the resource and/or an application programming interface (API) authorization request from an API invoker, wherein the authorization request for the resource is used to request, set, or modify the resource of the resource owner;
sending an authorization code request to a first entity, the authorization code request being used to request an authorization code; and
sending the authorization code received from the first entity to the API invoker.

2. The method of claim 1, further comprising:
performing mutual authentication with the API invoker; and
in the case that the mutual authentication is passed, establishing a first connection between the resource owner and the API invoker,
wherein the first connection is a secure connection for transmitting the authorization request for the resource and/or the API authorization request.

3. The method of claim 2, wherein performing the mutual authentication with the API invoker comprises at least one of:
in the case that the API invoker is a user equipment (UE), performing the mutual authentication with the API invoker based on a certificate; or
in the case that the API invoker is an application function (AF), performing the mutual authentication using a generic bootstrapping architecture (GBA)-based authentication mechanism, an authentication and key management for applications (AKMA)-based authentication mechanism, or a certificate-based authentication mechanism.

4. The method of any one of claims 1 to 3, wherein receiving the authorization request for the resource and/or the API authorization request from the API invoker comprises:
in the case that the API invoker obtains authorization of a service, receiving the authorization request for the resource from the API invoker; and
in the case that the API invoker does not obtain the authorization of the service, receiving the authorization request for the resource and the API authorization request from the API invoker,
wherein the authorization request for the resource comprises at least one of: an API invoker identity (ID), a resource owner ID, or a target resource ID, and the API authorization request comprises a service identifier.

5. The method of claim 4, wherein the service identifier comprises at least one of:
a service name identifier;
a service operation identifier;
an operation semantic identifier; or
an API ID.

6. The method of any one of claims 1 to 5, further comprising:
performing mutual authentication with the first entity; and
in the case that the mutual authentication is passed, establishing a second connection between the resource owner and the first entity,
wherein the second connection is a secure connection for transmitting the authorization code request and a response.

7. The method of any one of claims 1 to 6, wherein performing the mutual authentication with the first entity comprises:
performing the mutual authentication based on at least one of the following authentication mechanisms:
the certificate-based authentication mechanism;
the GBA-based authentication mechanism;
the AKMA-based authentication mechanism;
a transport layer security with pre-shared key (TLS-PSK); or
an open authorization (OAuth) token-based authentication mechanism.

8. The method of any one of claims 1 to 7, wherein sending the authorization code request to the first entity comprises at least one of:
granting the authorization request for the resource timely and sending the authorization code request to the first entity;
granting the authorization request for the resource asynchronously based on a local profile of the resource owner, and sending the authorization code request to the first entity; or
sending a local profile and/or the authorization code request to the first entity, wherein the local profile is used to assist the first entity to asynchronously grant the authorization request for the resource.

9. The method of any one of claims 1 to 8, further comprising:
in the case that the authorization request for the resource is authorized and the API invoker obtains the authorization of the service, receiving the authorization code from the first entity.

10. The method of any one of claims 1 to 9, wherein the resource owner is a UE, and the resource is quality of service and/or location information of the UE.

11. A method for invoking a resource, performed by a first entity, comprising:
receiving an authorization code request from a resource owner, the authorization code request being used to request an authorization code;
sending the authorization code to the resource owner;
receiving the authorization code from an application programming interface (API) invoker; and
generating a token based on the authorization code and sending the token to the API invoker.

12. The method of claim 11, further comprising:
performing mutual authentication with the resource owner; and
in the case that the mutual authentication is passed, establishing a second connection between the resource owner and the first entity,
wherein the second connection is a secure connection for transmitting the authorization code request and a response.

13. The method of claim 12, wherein performing the mutual authentication with the resource owner comprises at least one of:
performing the mutual authentication based on at least one of the following authentication mechanisms:
a certificate-based authentication mechanism;
a generic bootstrapping architecture (GBA)-based authentication mechanism;
an authentication and key management for applications (AKMA)-based authentication mechanism;
a transport layer security with pre-shared key (TLS-PSK); or
an open authorization (OAuth) token-based authentication mechanism.

14. The method of any one of claims 11 to 13, wherein receiving the authorization code request from the resource owner comprises at least one of:
receiving the authorization code request based on a timely grant of an authorization request for the resource by the resource owner;
receiving the authorization code request based on an asynchronously grant of the authorization request for the resource by the resource owner; or
receiving a local profile and/or the authorization code request from the resource owner, and granting the authorization request for the resource asynchronously.

15. The method of any one of claims 10 to 14, wherein receiving the authorization code request from the resource owner further comprises:
in the case that the authorization request for the resource is granted and the API invoker obtains an authorization of a service, generating the authorization code.

16. The method of claim 15, wherein in the case that the authorization request for the resource is granted and the API invoker obtains the authorization of the service, generating the authorization code comprises:
in the case that the authorization request for the resource is granted but the API invoker does not obtain the authorization of the service, determining whether an authorization request for the service of the API invoker is granted based on a preset profile; and
in the case that the authorization request for the service of the API invoker is granted, generating the authorization code.

17. The method of any one of claims 11 to 16, further comprising:
performing mutual authentication with the API invoker; and
in the case that the mutual authentication is passed, establishing a third connection between the API invoker and the first entity,
wherein the third connection is a secure connection for transmitting the authorization code.

18. The method of claim 17, wherein performing the mutual authentication with the API invoker comprises:
performing the mutual authentication based on at least one of the following authentication mechanisms:
the certificate-based authentication mechanism;
the GBA-based authentication mechanism;
the AKMA-based authentication mechanism;
the TLS-PSK; or
the OAuth token-based authentication mechanism.

19. The method of any one of claims 11 to 18, wherein generating the token based on the authorization code and sending the token to the API invoker comprises at least one of:
sending an access token and/or a refresh token to the API invoker; or
receiving the refresh token from the API invoker, and sending the access token to the API invoker based on the refresh token.

20. The method of claims 11 to 19, wherein the first entity is a common application programming interface framework (CAPIF) core function/authorization function.

21. A method for resource invocation, performed by an application programming interface (API) invoker, comprising:
sending an authorization request for the resource and/or an API authorization request to a resource owner, wherein the authorization request for the resource is used to request, set, or modify the resource of the resource owner;
receiving an authorization code from the resource owner and sending the authorization code to a first entity; and
receiving a token generated by the first entity based on the authorization code.

22. The method of claim 21, further comprising:
performing mutual authentication with the resource owner; and
in the case that the mutual authentication is passed, establishing a first connection between the resource owner and the API invoker,
wherein the first connection is a secure connection for transmitting the authorization request for the resource and/or the API authorization request.

23. The method of claim 22, wherein performing the mutual authentication with the resource owner comprises at least one of:
in the case that the API invoker is a user equipment (UE), performing the mutual authentication with the resource owner based on a certificate; or
in the case that the API invoker is an application function (AF), performing the mutual authentication with the resource owner using a generic bootstrapping architecture (GBA)-based authentication mechanism, an authentication and key management for applications (AKMA)-based authentication mechanism, or a certificate-based authentication mechanism.

24. The method of claim 22 or claim 23, wherein sending the authorization request for the resource and/or the API authorization request to the resource owner comprises:
in the case that the API invoker obtains authorization of a service, sending the authorization request for the resource to the resource owner; and
in the case that the API invoker does not obtain the authorization of the service, sending the authorization request for the resource and the API authorization request to the resource owner,
wherein the authorization request for the resource comprises at least one of: an API invoker identity (ID), a resource owner ID, or a target resource ID, and the API authorization request comprises a service identifier.

25. The method of claim 24, wherein in the case that the API invoker obtains the authorization of the service, and the authorization request for the resource sent from the API invoker to the resource owner is granted, the token generated by the first entity based on the authorization code comprises only authorization information related to the resource.

26. The method of any one of claims 21 to 25, further comprising:
performing mutual authentication with the first entity; and
in the case that the mutual authentication is passed, establishing a third connection between the API invoker and the first entity,
wherein the third connection is a secure connection for transmitting the authorization code.

27. The method of any one of claims 21 to 26, wherein receiving the token generated by the first entity based on the authorization code comprises at least one of:
receiving an access token and/or a refresh token from the first entity; or
sending the refresh token to the first entity and receiving the access token from the first entity based on the refresh token.

28. The method of any one of claims 21 to 27, wherein the API invoker is a UE or an AF, and the resource is quality of service and/or location information of the resource owner.

29. An apparatus for invoking a resource, configured on a resource owner, comprising a transceiver module, wherein the transceiver module is configured to:
receive an authorization request for the resource and/or an application programming interface (API) authorization request from an API invoker, wherein the authorization request for the resource is used to request, set, or modify the resource of the resource owner;
send an authorization code request to a first entity, the authorization code request being used to request an authorization code; and
send the authorization code received from the first entity to the API invoker.

30. An apparatus for invoking a resource, configured on a first entity, comprising a transceiver module, wherein the transceiver module is configured to:
receive an authorization code request from a resource owner, the authorization code request being used to request an authorization code;
send the authorization code to the resource owner;
receive the authorization code from an application programming interface (API) invoker; and
generate a token based on the authorization code and sending the token to the API invoker.

31. An apparatus for invoking a resource, configured on an application programming interface (API) invoker, comprising a transceiver module, wherein the transceiver module is configured to:
send an authorization request for the resource and/or an API authorization request to a resource owner, wherein the authorization request for the resource is used to request, set, or modify the resource of the resource owner;
receive an authorization code from the resource owner and send the authorization code to a first entity; and
receive a token generated by the first entity based on the authorization code.

32. A communication device, comprising: a transceiver; a memory; and a processor connected to the transceiver and the memory respectively, wherein the processor is configured to control receiving and sending of a wireless signal of the transceiver by executing computer-executable instructions in the memory and is capable of realizing the method of any one of claims 1 to 28.

33. A computer storage medium for storing computer-executable instructions, wherein when the computer-executable instructions are executed by a processor, the method of any one of claims 1 to 28 is realized.

34. A communication system, comprising a resource owner, an application programming interface (API) invoker, and a first entity, wherein:
the resource owner is configured to execute the method of any one of claims 1 to 9;
the first entity is configured to execute the method of any one of claims 10 to 19;
the API invoker is configured to execute the method of any one of claims 20 to 28.
